# EUROPEAN PATENT SPECIFICATION

(11) **EP 3 181 320 B1**
(45) Date of publication and mention of the grant of the patent: **26.09.2018**
(21) Application number: 16204298.0
(22) Date of filing: 15.12.2016
(51) Int. Cl.: B29C 33/04, B29C 70/32, B29C 41/30, B29C 41/46, B29C 41/52

(54) **APPARATUS FOR MANUFACTURING HOLLOW ELONGATED BODIES MADE OF COMPOSITE MATERIAL**
VORRICHTUNG ZUR HERSTELLUNG VON HOHLZYLINDRISCHEN KÖRPER AUS EINEM SCHICHTVERBUNDMATERIAL
DISPOSITIF DE FABRICATION POUR LA FABRICATION D'OBJETS CYLINDRIQUES CREUX EN MATÉRIAU COMPOSITE

(30) Priority: 15.12.2015 IT UB20159703
(43) Date of publication of application: 21.06.2017
(73) Proprietor: Top Glass EU SA, 6348 Lugano (CH)
(72) Inventor: BRANCA, Alfonso, 20145 Milano (IT)
(74) Representative: Sutto, Luca

(56) References cited:
- FR-A1- 2 543 877
- GB-A- 2 372 008
- US-A1- 2003 201 575
- Rotomachinery: "prm 3200 3 c ROTOMACHINERY GROUP http://www.rotomachinery.com", YouTube, 9 March 2011 (2011-03-09), pages 1-1, XP054976713, Retrieved from the Internet: URL:https://www.youtube.com/watch?v=RibREg sRNwM [retrieved on 2016-08-04]

## Description

The present invention refers to an apparatus and process for manufacturing hollow elongated bodies made of composite material. For example, the apparatus and process find an application in the manufacturing of high strength poles, for example made of synthetic resin (in other words made of thermoplastic polymeric or thermosetting matrix), reinforced with synthetic fibres such as carbon fibres, glass fibres, aramid fibre, Kevlar, boron fibre or with natural fibres such as natural fibres of animal origin or natural fibres of vegetal origin.

Elongated hollow bodies made of composite material, such as for example poles, are actually formed in rotating moulds: in practice the rotating mould centrifugates at high speed the resin which in turn impregnates the fibre arranged inside the mould.

Particularly, the synthetic resin is introduced inside the mould by pouring the resin itself, at a liquid state, at the open ends of the mould: thanks to the motion given to the mould, the liquid resin is absorbed by the supporting layers made of reinforcing fibre.

However, such method does not enable to uniformly distribute the resin and, therefore, the poles manufactured in this way, exhibit uneven mechanical characteristics and geometrical inaccuracies.

Approaches have been made for solving this problem by providing the resin through a suitably shaped and positioned tube. Specifically, documents US4518342 and IT1160844 describe an apparatus for forming poles comprising inside the rotating mould one or more guiding elements for guiding a dispensing head supplied by a hose connected to a pressurized container of liquid resin. In operation, a layer of glass fibres is positioned on all the internal surface of the mould and then the mould is put in rotation. The resin dispensing head is moved towards the inside of the mould so that the resin can be distributed on the deposited layers of glass fibres.

After the pole has been formed by depositing the correct amount of resin and by means of suitably heating and centrifugating means, the guides and the dispensing head are removed and the pole is extracted from the mould. FR 2543877A1 discloses a rotary mold wherein resin is positioned on a felt carrier. The mold has means for guiding a head distributing resin material inside the mold 11.

Another known process is described in document US 4,515,547, wherein a resin injection nozzle is guided along the longitudinal direction of the mould and wherein a light source is arranged at the opposite end of the mould for lighting the inside of the mould itself, while a flange is fixed at the lower end of the mould. Due to the conical shape of the mould, during the rotation the resin tends to move away towards areas of greater diameter of the mould itself: the flange fixed at the end of the mould prevents the resin from undesiderably flowing outside.

While the above described solutions enable to manufacture poles of composite material of good quality, the actual manufacturing apparatuses and processes can be further improvable.

### SUMMARY OF THE INVENTION

In particular it is an object of the invention to provide an apparatus for the production of hollow bodies in which the mold forming of the hollow bodies is kept at uniform thermal conditions.
A further object of the invention is to ensure an adequate support and movement to the mold for forming the hollow bodies without compromising the simplicity of the apparatus.
An auxiliary object of the invention is to ensure the formation of bodies of a high quality and uniformity, without waste of synthetic resin.
These and further aims are substantially achieved by an apparatus according to one or more of the appended claims.
Further aspects of the invention are illustrated below.
A 1^{st} aspect concerns an apparatus for manufacturing hollow elongated bodies, optionally tapered poles, made of reinforced synthetic resin:
- an elongated mould having an internal surface configured for receiving reinforcing fibres and synthetic resin, said internal surface of the elongated mould having a tapered shape, optionally a frusto-conical one,
- at least one actuating device configured for putting in rotation the mould around a prevalent development longitudinal axis of the mould itself,
- at least one injection nozzle positioned and configured for introducing synthetic resin in said elongated mould, optionally wherein the injection nozzle is configured for operating at at least one longitudinal end of said mould,
- a resin supplying device connected to the injection nozzle and configured for supplying synthetic resin at a liquid state to the injection nozzle.

In a 2^{nd} aspect according to the 1^{st} aspect the injection nozzle is configured for operating at at least one longitudinal end of said mould.

In a 3^{rd} aspect according to any one of the preceding aspects, the apparatus includes:
- a temperature controlling group associated to the mould and in turn comprising:
   o a predetermined number of distributors of a thermoregulation fluid, positioned outside the mould and configured for directing the thermoregulation fluid at least towards predetermined portions of an external lateral surface of the mould itself,
   o a collecting unit positioned below the mould and configured for collecting the thermoregulation fluid,
   o a fluid circuit interposed between the collecting unit and the predetermined number of distributors, said fluid circuit being configured for conveying the thermoregulation fluid from the collecting unit towards the predetermined number of distributors.

In a 4^{th} aspect according to the preceding aspect the control group comprises at least one heat exchange unit, placed in the fluid circuit and destined to enable a thermal regulation of the thermoregulation fluid.

In a 5^{th} aspect according to any one of the preceding two aspects the control group comprises at least one pump placed in the fluid circuit, optionally placed between the collecting unit and the heat exchange unit.

In a 6^{th} aspect according to any one of the preceding two aspects the apparatus, or directly the control group, comprises a processing unit active on at least one of said pump and said heat exchange unit.

In a 7^{th} aspect according to the preceding aspect said processing unit is configured for regulating at least one of:
- a flow rate of said pump, and
- an operative parameter of said heat exchange unit for maintaining the thermoregulation fluid temperature inside a predetermined thermal range.

For example, the thermal range may be a temperature less than 100°C, preferably comprised between 80°C and 90°C.

In a 8^{th} aspect according to any one of the preceding aspects from the 3^{rd} to the 7^{th} the predetermined number of thermoregulation fluid distributors comprises a plurality of distinct distributors positioned outside the mould and configured for directing the thermoregulation fluid at least towards respective portions of an external lateral surface of the mould itself.

In a 9^{th} aspect according to any one of the preceding aspects from the 3^{rd} to the 8^{th} said distributors are radially arranged around the external lateral surface of the mould to define a plurality of ejecting points positioned according to circular crowns surrounding the mould and axially offset from each other.

In a 10^{th} aspect according to any one of the preceding aspects from the 3^{rd} to the 9^{th} the distributors are spaced along the longitudinal development of the mould, for example evenly spaced from each other.

In an 11^{th} aspect according to any one of the preceding aspects from the 3^{rd} to the 10^{th} each of said distributors comprises at least one regulation valve member and at least one pressure sensor connected to a processing unit (or to said processing unit), this latter being configured for receiving a pressure signal from each pressure sensor and for controlling each valve member in order to regulate a supply pressure and thus a flow rate of the thermoregulation fluid ejected from each distributor as a function of the detected pressure and a desired value of pressure (or flow rate).

In a 12^{th} aspect according to the preceding aspect the desired pressure value (or the flow rate value) is a set value for each distributor and varies as a function of the distributor position along the mould longitudinal axis.

In a 13^{th} aspect according to any one of the preceding two aspects the processing unit is configured for controlling the valve member of each distributor in order to supply the fluid at a supply pressure, the greater the diameter of the mould cross-section which the respective distributor faces the higher the supply pressure.

In a 14^{th} aspect according to any one of the preceding aspects from the 3^{rd} to the 13^{th} the apparatus comprises a supporting stationary structure destined to rotatively support said mould.

In a 15^{th} aspect according to the preceding aspect, the apparatus comprises a plurality of rolling element bearings positioned outside the mould, each of said bearings having a stationary part constrained to the supporting stationary structure, and a rotating part constrained to a respective cross-section of the external lateral surface of the mould, rolling elements being positioned between the stationary part and the rotating part of each bearing.

In a 16^{th} aspect according to the preceding aspect said stationary part and said rotating part of each bearing being positioned concentrically around a respective cross-section of the mould.

In a 17^{th} aspect according to any one of the preceding aspects from the 3^{rd} to the 16^{th} said fluid distributors are configured and oriented for directing a portion of the thermoregulation fluid towards said bearings.

In a 18^{th} aspect according to any one of the preceding aspects the actuating device comprises a driving member cinematically connected to the mould and configured for putting in rotation the mould around said prevalent development longitudinal axis of the mould itself.

In a 19^{th} aspect according to the preceding aspect said driving member commands a driving wheel coupled to the driving shaft and configured for moving at least one transmission member in turn configured for putting in rotation a driven crown coupled to an external surface of the lateral wall of the mould.

In a 20^{th} aspect according to the preceding aspect the elongated mould exhibits an external lateral surface and an internal frusto-conical shape surface, wherein said longitudinal axis is a symmetry central axis of the internal frusto-conical surface and wherein said driven crown is engaged to a terminal area of minimum diameter of the external lateral surface.

In a 21^{st} aspect according to any one of the preceding aspects the injection nozzle operates in a fixed position at a terminal area of the mould and exhibits a dispensing opening arranged inside the mould and at a predetermined distance - not greater than 1/10 of the mould axial extension - from the opening of minimum area of the mould itself.

In a 22^{nd} aspect according to any one of the preceding aspects the resin supplying device is configured for supplying at a pressure higher than the atmospheric pressure, synthetic resin at a liquid state to the injection nozzle.

In a 23^{rd} aspect according to any one of the preceding aspects the apparatus comprises a covering structure placed at least above and laterally to the external lateral surface of the mould to define a housing receiving the mould and the fluid distributors.

In a 24^{th} aspect according to any one of the preceding aspects the resin supplying device is configured for supplying liquid synthetic resin comprising at least one active agent at a first concentration, the active agent being one of:
- a crosslinking catalyst,
- a crosslinking accelerator,
- a crosslinking agent,
- an agent including both a crosslinking catalyst and a crosslinking accelerator,
- an agent including both a crosslinking agent and an accelerator,
- an agent including a crosslinking agent and a catalyst.
- an agent including a crosslinking agent, an accelerator and a crosslinking catalyst.

In a 25^{th} aspect according to any one of the preceding aspects the dispensing device is configured - at each cycle of manufacturing a respective elongated body - for dispensing a mass of liquid synthetic resin greater than the liquid mass necessary for forming said elongated body.

In a 26^{th} aspect according to the preceding aspect a processing unit (or said processing unit) is configured for controlling the dispensing device and commanding - during each cycle of manufacturing a respective elongated body - to dispense the liquid synthetic resin mass in an amount greater than the mass amount necessary for forming said elongated body in order to generate a surplus mass destined to exit from the mould.

In a 27^{th} aspect according to any one of the preceding aspects the apparatus comprises a main flange fixed at the longitudinal end of said mould having the greatest internal cross-section, said main flange projecting radially towards the inside of the mould and exhibiting an internal diameter substantially corresponding to the internal diameter of the longest base of said forming elongated body.

In a 28^{th} aspect according to the preceding aspect the apparatus comprises an ancillary flange fixed at the longitudinal end of said mould having the smallest inside cross-section, said ancillary flange projecting radially towards the inside of the mould and exhibiting an internal diameter substantially corresponding to the internal diameter of the shortest base of said forming elongated body.

In a 29^{th} aspect according to any one of the preceding two aspects said main flange and/or ancillary flange exhibit a circular crown shape and are concentrically and coaxially arranged with respect to the frusto-conical internal surface of said mould.

In a 30^{th} aspect according to any one of the preceding five aspects the apparatus comprises a collector placed at at least one of the longitudinal ends of the mould and configured for collecting a surplus mass of the liquid synthetic resin exiting the mould.

In a 31^{st} aspect according to any one of the preceding six aspects the apparatus comprises a collector placed at at least one of the longitudinal ends of the mould and configured for collecting a surplus mass of the liquid synthetic resin flowing over said main flange.

In a 32^{nd} aspect according to any one of the preceding two aspects
said collector exhibits a discharge opening, optionally a valved one, configured for discharging said surplus synthetic resin towards a collecting body.

In a 33^{rd} aspect according to any one of the preceding aspects the apparatus comprises an illuminator, preferably and UV illuminator, positioned relative to the mould such as to light an inner cavity of the mould and promote crosslinking of said synthetic resin.

In a 34^{th} aspect according to any one of the preceding aspects the apparatus comprises a winder, for example a tubular one, configured for receiving at least partially overlapped wound layers of a reinforcing fibrous material, optionally made of synthetic reinforcing fibres such as carbon fibres, glass fibres, aramid fibre, Kevlar, boron fibre or natural fibres such as natural fibres of animal origin or natural fibres of vegetal origin.

In a 35^{th} aspect according to the preceding aspect said elongated mould is open on at least one longitudinal end for enabling to respectively introduce and extracting from said mould the winder.

In a 36^{th} aspect according to any one of the preceding two aspects a movement for inserting and extracting the winder, is performed by at least one respective actuating group controlled by a processing unit (or said processing unit).

A 37^{th} aspect concerns a process of manufacturing hollow elongated bodies, optionally tapered poles, made of reinforced synthetic resin, comprising - for each hollow body manufacturing cycle - the following steps:
- arranging, inside an elongated mould, reinforcing fibres in order to substantially cover a predominant portion of the internal surface of the mould, said internal surface of the elongated mould having a tapered shape, optionally a frusto-conical one,
- introducing into said mould an amount of liquid synthetic resin comprising at least one active agent at a first concentration, the active agent being selected among:
   o a crosslinking catalyst,
   ∘ a crosslinking accelerator,
   ∘ a crosslinking agent,
   ∘ an agent including both a crosslinking catalyst and a crosslinking accelerator,
   ∘ an agent including both a crosslinking agent and an accelerator,
   ∘ an agent including a crosslinking agent and a catalyst,
   ∘ an agent including a crosslinking agent, an accelerator and a crosslinking catalyst,
- putting in rotation the mould around a prevalent development longitudinal axis of the mould itself in order to impregnate said reinforcing fibres with said liquid synthetic resin,
- solidifying said liquid synthetic resin for forming an elongated hollow body,
- extracting said elongated hollow body at the solid state from the mould.

In a 38^{th} aspect according to the preceding aspect said solidification comprises a crosslinking and said synthetic resin comprises polymer or polymerizable material.

In a 39^{th} aspect according to any one of the preceding two aspects the process provides that:
- the liquid synthetic resin introduced in said mould, during each cycle of manufacturing a respective elongated body, exhibits a mass greater than the liquid mass necessary for forming said elongated body for therefore defining a surplus mass of liquid resin,
- the surplus mass is collected outside said mould, and
- to the surplus mass collected outside the mould it is added a new liquid resin mass in which said active agent is present at a second concentration smaller than the one of said first concentration for forming a mixture of liquid resin.

In a 40^{th} aspect according to the preceding aspect the second mass concentration of the active agent is zero or less than 0.01%.

In a 41^{st} aspect according to any one of the preceding two aspects the surplus mass is collected in a collector placed in at least one of the longitudinal ends of the mould and is transferred to a container wherein said liquid resin mixture is formed.

In a 42^{nd} aspect according to any one of the preceding three aspects the new liquid resin mass added to the surplus mass collected outside the mould for forming the liquid resin mixture in said container, is at least equal to the surplus mass, so that the concentration of said active agent in the liquid mixture in said container is 50% or less than the first concentration.

In a 43^{rd} aspect according to any one of the preceding four aspects the new liquid resin mass added to the surplus mass collected outside the mould for forming the liquid resin mixture in said container, is more than the surplus mass, so that the concentration of said active agent in the liquid mixture in said container is less than the first concentration.

In a 44^{th} aspect according to any one of the preceding five aspects the new liquid resin mass added to the surplus mass collected outside the mould for forming the liquid resin mixture in said container, is at least twice to the surplus mass.

In a 45^{th} aspect according to any one of the preceding six aspects
- once completed the cycle of manufacturing at least one elongated hollow body - to said resin mixture it is added a composition comprising said active agent at a third concentration for forming a liquid synthetic resin with the active agent at least at said first concentration which - in a following hollow body manufacturing cycle - is supplied inside said mould.

In a 46^{th} aspect according to any one of aspects from the 37^{th} to the 45^{th}, the process uses and apparatus according to any one of aspects from the 1^{st} to the 36^{th}.

In a 47^{th} aspect according to any one of aspects from the 37^{th} to the 46^{th} - during said step of introducing the synthetic resin in the mould - this latter is put in rotation around a prevalent development longitudinal axis of the mould itself, particularly at a predetermined angular speed.

In a 48^{th} aspect according to any one of aspects from the 37^{th} to the 47^{th}, the liquid state synthetic resin is supplied to the injection nozzle at a pressure greater than the atmospheric pressure.

In a 49^{th} aspect according to any one of aspects from the 37^{th} to the 48^{th}, the process has the steps of controlling the temperature of the mould by directing a thermoregulation fluid at least towards predetermined portions of an external lateral surface of the mould itself, collecting the thermoregulation fluid falling from the mould, conveying the collected thermoregulation fluid again towards said portions of the external lateral surface of the mould.

In a 50^{th} aspect according to the preceding aspect the collected thermoregulation fluid is initially supplied to a heat exchange unit in order to enable to thermally regulate the thermoregulation fluid and therefore again towards said portions of the external lateral surface of the mould.

In a 51^{st} aspect according to any one of the preceding two aspects the thermoregulation fluid supplied to the mould is maintained at a temperature inside a predetermined thermal range, for example at a temperature smaller than 100°C, preferably comprised between 80°C and 90°C.

In a 52^{nd} aspect according to any one of the preceding three aspects the thermoregulation fluid is directed at least towards a plurality of portions of an external lateral surface of the mould itself.

In a 53^{rd} aspect according to any one of the preceding four aspects a portion of the thermoregulation fluid is directed towards the rotating supporting bearings of the mould.

In a 54^{th} aspect according to any one of the preceding aspects from the 37^{th} to the 53^{rd} said synthetic resin is of a light-crosslinkable type, and wherein it is provided to light an internal cavity of the mould itself for promoting or aiding said solidification by crosslinking said liquid synthetic resin.

In a 55^{th} aspect according to any one of the preceding aspects from the 37^{th} to the 54^{th} it is provided a step of preparing reinforcing fibres to be arranged inside the mould, said preparing step comprising:
- arranging in a plane a plurality of layers of said reinforcing fibers, optionally wherein each of said layers exhibits a respective width and a respective length different from the ones of the other layers,
- at least partially overlapping on each other said layers,
- winding said layers on a winder, optionally on a tubular winder.

In a 56^{th} aspect according to the preceding aspect the step of arranging the reinforcing fibres inside said elongated mould comprises:
- introducing in said mould, the winder having said layers wound on the winder itself said introduction being performed through at least one end opening of the mould,
- drawing away the winder from the fibrous material (F) and extracting such winder from the mould,
- putting in rotation the mould in order to enable to unwind the reinforcing fibres layers and progressively depositing the same at said internal surface of the mould.

In a 57^{rd} aspect according to any one of the preceding aspects from the 37^{th} to the 56^{th} the step of inserting the liquid resin in the mould is performed by maintaining the injection nozzle in a fixed position at a terminal area of the mould, the dispensing opening being arranged inside the mould and at a predetermined distance - not greater than 1/3 of the mould axial extension - from a minimum area opening of the mould itself.

In a 58^{rd} aspect according to any one of the preceding aspects from the 37^{th} to the 57th the thermoregulation fluid comprises water or, preferably, oil, particularly diathermic oil.

In a 59^{th} aspect according to any one of the preceding aspects from the 37^{th} to the 58^{th} the reinforcing material comprises synthetic reinforcing fibers, such as carbon fibers, glass fibers, aramid fibre, Kevlar, boron fibre or natural reinforcing fibres such as natural fibres of animal origin or natural fibres of vegetal origin.

In a 60^{th} aspect said reticulating agent is a crosslinking catalyst or accelerator.

### DETAILED DESCRIPTION

Further characteristics and advantages will better appear from the detailed description of an exemplifying
- and therefore non-limiting - embodiment of an apparatus and process according to the invention. The detailed description will be given with reference to the accompanying drawings which are provided in an indicative and non-limiting way, wherein:
- Figure 1 is a schematic view of an apparatus for manufacturing elongated hollow bodies, and particularly tapered tubular poles according to the aspects of the invention;

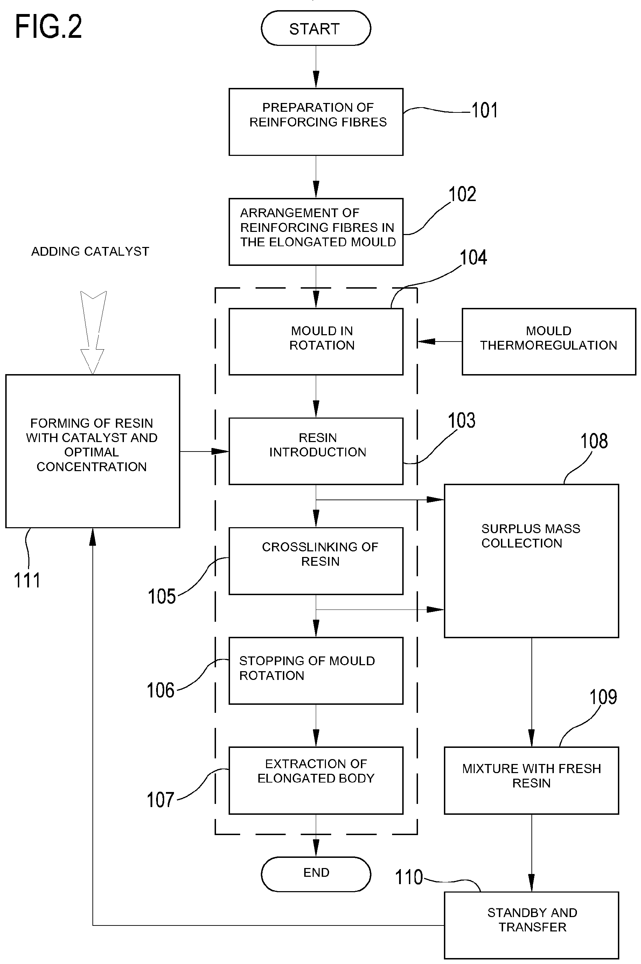

- Figure 2 is a flowchart showing the steps of a process, using for example the apparatus in Figure 1, for manufacturing elongated hollow bodies, and particularly tapered tubular poles according to the aspects of the invention.

With reference to the accompanying figures, 1 generally indicates an apparatus for manufacturing elongated hollow bodies, and particularly tubular poles made of reinforced synthetic resin.

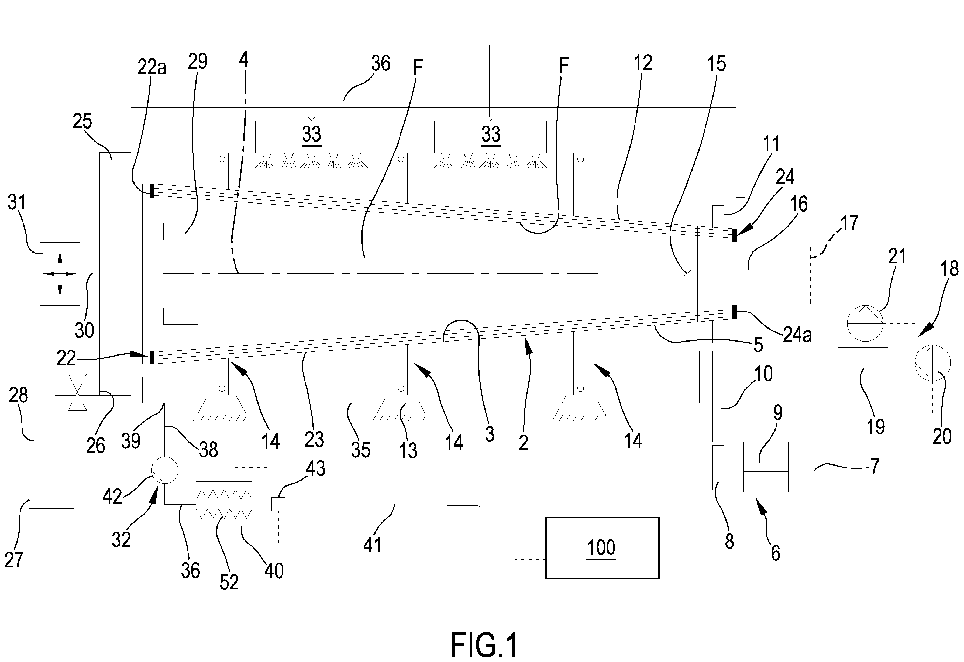

The apparatus 1 comprises a mould 2 having an elongated shape exhibiting an internal surface 3 configured for receiving reinforcing fibres F and synthetic resin. The internal surface 3 of the elongated mould 2 has a tapered shape; particularly, in the herein illustrated example, the mould 2 exhibits an axial symmetrical shape with reference to its prevalent development longitudinal axis 4 which is also a symmetry axis. Further, in the illustrated example, both the internal surface 3 and the external surface 5 of the mould 2 are frusto-conical and concentric so that, by putting in rotation the mould around said longitudinal axis, there will be no eccentric masses. Obviously, the apparatus can comprise a plurality of moulds 2 operating parallely to each other: for simplifying the description, the following will describe an example of an apparatus 1 with a single mould 2, however the characteristics described in the following can be applied to the case of a plurality of moulds operating in parallel. For putting the mould 2 in rotation around the prevalent development longitudinal axis 4 of the mould itself, the apparatus 1 comprises at least one actuating device 6 having a driving member 7 cinematically connected to the mould 2. In the illustrated example, the driving member 7 commands a driving wheel 8, for example formed by a driving pulley, coupled to the driving shaft 9, and configured for moving at least one transmission member 10, such as for example a transmission belt. The transmission member 10 in turn engages a driven wheel 11 connected to the mould. For example, the driven wheel 11 can be formed by a circular crown coupled to an external surface of the lateral wall of the mould 2 in order to receive the motion of the transmission member 10 and transfer it to the mould. Other cinematic elements for transmitting the motion can be provided besides what has been shown in Figure 1: for example, the driving shaft 9 can be connected to a toothed driving wheel capable of engaging - directly or by interposing further transmission members - a driven "wheel" comprising a gear rack supported outside the mould.

In any case, for limiting the radial size, the circular driven crown 11, implemented as a toothed crown, a gear rack or pulley, is preferably engaged to a terminal area 12 of minimum diameter of the external lateral surface of the mould.

In order to enable to rotate the mould around its longitudinal axis, the apparatus 1 comprises a stationary supporting structure 13 adapted to rotatively support the mould, as specifically described in the following. Particularly, the apparatus 1 comprises a plurality of bearings 14 having rolling elements, located externally to the mould itself; as a function of the axial size of the mould 2, two or more bearings 14 may be provided: for example, the apparatus 1 may comprise three, four or more bearings axially evenly spaced from each other along the longitudinal development of the mould. Each bearing 14 exhibits a stationary part constrained to the stationary supporting structure 13, and a rotating part constrained to a respective section of the external lateral surface of the mould; both the stationary part and the rotating part surround the mould lateral surface and are arranged coaxially to this latter: in other words, each bearing exhibits an internal diameter such to be engaged to the respective section of the mould 1; between the stationary part and the rotating part of each bearing there are rolling elements (rollers, balls or similar, for example) enabling to support and rotate under conditions of minimum friction of the mould. As shown in Figure 1, the bearings are engaged so that the symmetry longitudinal axis 4 of the mould is substantially horizontal.

In order to enable to supply the liquid resin inside the mould, the apparatus 1 then comprises at least one injection nozzle 15 configured for operating at at least one longitudinal end of said mould; the injection nozzle 15 may consist in a terminal part of a resin supplying tube 16 fixedly positioned or supported by a moveable head 17 which may be moved away from the mould 2 so that the injection nozzle exhibits the desired axial position with respect to the mould. More particularly, the injection nozzle is positioned and configured for ensuring the precise introduction of the synthetic resin, without wasting it, in said elongated mould 2: in practice, during the injection, the injection nozzle 15 operates in a stationary position at a terminal area of the mould (particularly at the minimum diameter terminal area 12 of the mould 2) and exhibits a dispensing opening arranged inside the mould. Still more particularly, according to an aspect of the invention, the dispensing opening of the injection nozzle 15 is placed, during the liquid synthetic resin supply, at a predetermined distance - not greater than 1/10 of the axial extension of the mould - from the minimum area opening of the mould itself. In the example of Figure 1, the nozzle injecting opening 15 is located, during the resin injection, at about 10-15 cm from the minimum area cross-section of the mould. Still referring to Figure 1, it is observed that the injection nozzle is positioned at an end of the supplying tube 16 having a further end connected to a resin supplying device 18 configured for supplying synthetic resin at a liquid state to the injection nozzle 15; it is noted that in case it is provided the movable head 17, the supplying tube 16 will comprise two portions: one extending between the head and nozzle 15 and one (capable of extending and retracting) extending between the head 17 and supplying device 18. For example, the supplying device 18 can comprise a pressurized supplying tank 19 and therefore capable of supplying liquid synthetic resin at a pressure greater than the atmospheric pressure: the tank pressurization may be ensured, for example, by an air-powered pump 20 active on the reservoir 19. Alternatively, the supplying device 18 may comprise a supplying reservoir 19, containing a liquid resin at the atmospheric pressure, and a supplying pump 21 capable of delivering the resin with the needed head to the injection nozzle.

According to an aspect of the invention, the liquid synthetic resin contained in the cited reservoir 19 and supplied by the supplying device, includes at least one active agent, comprising at least one catalyst and/or accelerator, necessary for successively crosslinking and solidifying the resin itself, which is at a first concentration which practically represents the ideal concentration for the successive crosslinking step. Obviously, such concentration depends on the type of catalyst and/or accelerator and on the type of resin used. From the point of view of the present invention it is not specified which is the catalyst and/or accelerator, but simply that the active agent present in the liquid synthetic resin received in the supplying reservoir 19 must be at a first concentration which is the optimal one selected according to the crosslinking process for forming the hollow elongated body.

The supplying device 18 is configured - during each cycle of manufacturing a respective elongated body - for dispensing a mass of liquid synthetic resin greater than the liquid mass necessary for forming said elongated body. In other words, the amount of resin dispensed to each cycle from the supplying device, entails a surplus material which exits the mould 2. For this purpose, the processing unit 100 is configured for controlling the supplying device 18 and commanding - during each cycle of manufacturing a respective elongated body - to dispense the liquid synthetic resin mass in a quantity greater than the mass quantity necessary for forming said elongated body in order to generate a surplus mass destined to exit from the mould. As it can be observed in Figure 1, the apparatus 1 exhibits a main flange 22 fixed at the longitudinal end of the mould having the greatest internal cross-section: the main flange 23 radially projects towards the inside of the mould, and exhibits an internal diameter substantially corresponding to the internal diameter of a longest base of the forming elongated body. In other words, the main flange 23 defines the maximum thickness of the liquid resin which, during the manufacturing cycle, can build up inside the mould 2 at the mould area of the greatest diameter: possible additional resin flows over the flange and is collected. Analogously, an ancillary flange 24 is fixed at the longitudinal end of the mould having the smallest internal cross-section: also the ancillary flange 24 radially projects towards the inside of the mould, and exhibits an internal diameter substantially corresponding to the internal diameter of the shortest base of said forming elongated body. Therefore, the ancillary flange defines the maximum thickness of the liquid resin that, during the manufacturing cycle, can build up inside the mould at the mould area of the smallest diameter: possible additional resin flows over the ancillary flange and is collected. As it is visible in Figure 1, the mould is frusto-conical, the main and ancillary flanges exhibiting a circular crown shape: such flanges are concentric and coaxially arranged with respect to the internal frusto-conical surface of said mould in order to define, at each mould end, a respective sealing edge 22a, 24a having a constant radial extension. In practice, the main flange and ancillary flange define the maximum thickness of the elongated body during the manufacturing step and therefore the maximum volume of resin which can be received at each cycle inside the mould. In an embodiment of the invention, the surplus resin is collected by a respective collector 25 placed at one or both the longitudinal ends of the mould: in the illustrated example, since the symmetry longitudinal axis of the mould is horizontal, the collector 25 is placed only at the maximum diameter end of the mould and is configured for collecting the surplus mass of the liquid synthetic resin exiting from the mould 2 and particularly flowing over said main flange 22. The collector 25 exhibits a discharge opening 26, optionally a valved one, configured for discharging the surplus synthetic resin towards a collecting tube. The collecting body can for example comprise a container or bin of a predetermined volume. The collecting body is used for receiving a predetermined quantity of liquid synthetic resin from the collector 25 and for enabling, through a discharge opening 28, to add new resin devoid of the active agent (catalyst and/or accelerator) or with said active agent at a very low concentration, in order to dilute the catalyst and/or accelerator concentration present in the mixture, obtained by mixing the new resin with the resin from the collector 25.

Last but not least, when are used resins requiring light for being cross-linked, the apparatus can comprise an illuminator 29, preferably a UV illuminator, positioned with respect to the mould to be lighted in a cavity inside the mould itself in order to promote the crosslinking of said synthetic resin. In order to enable to correctly deposit the fibre F in the mould, the apparatus 1 can comprise a winder 30, for example a tubular one, on which overlapped layers of the reinforcing fibrous material F which is desired to deposit in the mould 2 are wound. The winder 30, provided with the wound fibrous material F, is introduced in the mould 2 at the beginning of each manufacturing cycle - before depositing the resin-through an open longitudinal end of the mould 2. Once the winder 30 with the wound reinforcing fibrous material F is introduced in said mould, the winder is drawn out the fibrous material F and extracted. Therefore, by suitably rotating with respect to each other the fibrous material (which has the shape of a roll) and the mould, the fibrous material is unrolled and then is deposited on the mould 2 internal surface: in practice, the fibrous material is rotated in a direction (clockwise, for example), while the mould is put in rotation in an opposite direction (anticlockwise, for example) to cause the desired unrolling effect; subsequently, the resin may be supplied by the supplying device 18. The movement for inserting and extracting the winder can be controlled by a respective actuating group 31 controlled by the processing unit 100.

According to a further aspect of the invention, in addition the apparatus 1 comprises a temperature controlling group 32 associated to the mould 2 and in turn comprising a predetermined number of thermoregulation fluid distributors 33. The distributors 33 are positioned outside the mould and are configured for directing the thermoregulation fluid at least towards a plurality of predetermined portions of the external lateral surface of the mould in order to perform a thermal treatment on the whole external surface of the mould. To this end, the distributors 33 may be arranged radially around the external lateral surface of the mould to define a plurality of ejecting points according to circular crowns surrounding the mould and axially offset from each other. For example, two or more distributors 33 axially spaced from each other along the longitudinal development of the mould may be provided and each being provided with a plurality of ejecting points arranged circumferentially around the mould.

According to a further aspect of the invention, the distributors 33 are spaced along the longitudinal development of the mould, for example are evenly spaced from each other, and each comprises at least one adjusting valve member and at least one pressure sensor connected to the processing unit 100. Moreover, the unit 100 is configured for receiving a pressure signal from each pressure sensor and controlling each valve member in order to adjust a supply pressure to the distributor 33, and therefore a flow rate of the thermoregulation fluid ejected from each distributor, as a function of the detected pressure and a desired pressure value which, in turn, is a function of the position of the distributor along the longitudinal axis 4. Specifically, the processing unit 100 controls the valve member of each distributor in order to supply the fluid at a supply pressure, the greater the diameter of the mould cross-section which the respective distributor faces the higher the supply pressure.

In a variant of an embodiment, the fluid distributors 33 are configured and oriented for directing a portion of the thermoregulation fluid towards the bearings 14 in order to lubricate and simultaneously thermally control also these latter, ensuring in this way an optimal operation.

The temperature controlling group 32 further comprises a collecting unit 35, for example shaped as a tank, placed below the mould and configured for collecting the thermoregulation fluid that, after wetting the mould external surface, should fall by gravity towards the ground. Above the collecting unit 35, it is provided a covering structure 36 extending above and laterally the external lateral surface of the mould to define a housing receiving the mould and fluid distributors, in order to provide a thermal insulation and a protection both for the mould and the moving parts of the apparatus. Further, a fluid circuit 37 is interposed between the collecting unit 35 and distributors 33: the fluid circuit is configured for conveying the thermoregulation fluid from the collecting unit 25 towards the distributors 33 and provides at least one discharging conduit 38 withdrawing the thermoregulation fluid exiting a discharge opening 39 of the collecting unit 35, and conveying the fluid towards at least one heat exchange unit 40 positioned in the fluid circuit, and destined to enable a thermal regulation of the thermoregulation fluid inside a predetermined temperature range. The fluid exiting the heat exchange unit 40 enters a delivery conduit 41 communicating with the several thermoregulation fluid distributors. The controlling group 32 comprises at least one pump 42 placed in the fluid circuit, for example on the discharging conduit between the collecting unit and heat exchange unit, which pumps the fluid from the collecting unit towards the heat exchange unit and from there to the distributors. It is observed that the typically used resins for manufacturing poles, during the crosslinking step, perform an exothermic reaction, and therefore it is required a continuous and controlled cooling of the system. Specifically, in most cases, it has been found useful to maintain the temperature of the thermoregulation fluid supplied to the distributors 33 in a thermal range proximate to 85°C. To this end, the apparatus 1 or controlling group 100 comprises a processing unit 100 active on the pump and heat exchange unit in order to regulate the flow rate of the pump and at least one operative parameter of the heat exchange unit, for maintaining the thermoregulation fluid temperature in a predetermined thermal range, for example at a temperature less than 100°C, preferably comprised between 80°C and 90°C. More generally, the processing unit is capable of receiving or knowing the desired temperature or the thermal range in which the thermoregulation fluid falls and, therefore, controls the pump 42 and heat exchange unit 40 in order to maintain the cooling fluid temperature in a neighborhood of the desired temperature or inside such range.

For example, the heat exchange unit 40 may comprise heating electric resistances 52 and the control parameter can be in this case the temperature of the thermoregulation fluid exiting the heat exchange unit, as detected, for example, by a suitable heat sensor 43. The processing unit 100 may control the power supply to the electric resistances 52 in order to maintain the outlet temperature from the heat exchange unit into a predetermined range. Alternatively, a simple thermostat may activate the electric resistances for a predetermined time range when the outlet temperature of the fluid should fall below a predetermined value. In a further alternative, if the thermoregulation fluid should be cooled, the processing unit can control the heat exchange surfaces or the temperature of a cooling fluid of the heat exchange unit 40. Obviously, the control parameter can also be another reference temperature of the thermoregulation fluid, detected at points in the fluid circuit different from what has been above described.

After such substantially structural description, in the following a process of manufacturing elongated hollow bodies, optionally tapered poles, made of reinforced synthetic resin will be described. The process, described in the following, by way of example makes use of the apparatus according to what has been above described and/or according to what is claimed in the attached claims.

The manufacturing process comprises - for each cycle of manufacturing a hollow body - the following steps.

Firstly, it is provided a step 101 of preparing the reinforcing fibre to be placed inside the mould; the preparation step comprises the sub-steps of:
- arranging in a plane, a plurality of reinforcing fibre layers F,
- overlapping, at least partially, on each other said fibre layers: for example the layers F can be partially overlapped on each other so that once wound on a frusto-conical winder, it is ensured an uniform fibre distribution (or following, anyway, a predetermined rule) along the axis of the winder itself,
- winding said fibre layers F around the winder 30.

It is observed that, optionally, each of said reinforcing fibre layers, exhibits a respective width and a respective length different from the ones of the other layers, so that it is possible to concentrate the greatest fibre quantity in areas where it is required the highest mechanical strength.

Then, the reinforcing fibres are arranged (step 102) inside the elongated mould 2, in order to substantially cover an internal surface of the mould; the step 102 of arranging the reinforcing fibres inside said elongated mould provides - before depositing the resin and through an open longitudinal end of the mould 2 - to introduce in the mould 2 the winder with said wound fibre layers F. Once the winder 30 with the wound reinforcing fibre material F has been introduced in said mould, the winder is drawn out the fibrous material F and extracted, leaving the fibrous material inside the mould. Therefore, by suitably rotating with respect to each other the fibrous material (having the shape of a roll) and the mould, the fibrous material is unrolled and then is deposited on the mould 2 internal surface, in order to substantially cover such mould internal surface.

Once the fibre layers F have been positioned, it is introduced in said mould an amount of liquid synthetic fibre (step 103) comprising at least one active agent (a catalyst and/or accelerator) at a first concentration. During the resin introduction, the mould 2 is placed or maintained in rotation around the prevalent development longitudinal axis 4 of the mould itself (step 104), in order to impregnate said reinforcing fibres with said liquid synthetic resin: due to the centrifugal force, gravity and capillarity through the fibrous material F, the reinforcing fibre layers are progressively impregnated with the liquid synthetic resin.

Then, always keeping in rotation the mould, the liquid synthetic resin starts solidifying in order to form a solid elongated hollow body (step 105). By stopping the mould rotation (step 106), the solid state elongated body can be then extracted from the mould itself (step 107) .

According to an aspect of the invention, the liquid synthetic resin, introduced in the mould during each cycle of manufacturing a respective elongated body, exhibits a mass greater than the liquid mass required for forming the elongated body. Therefore, it is defined a surplus mass of liquid resin which, by flowing over the main flange 22, is collected by the collector 25 and conveyed towards the collecting bin 27 outside said mould (step 108).

To the surplus mass of used liquid resin collected outside the mould it is added a mass of new liquid resin in which the active agent (catalyst and/or accelerator) is present at a second concentration less than the first concentration for forming a liquid resin mixture in which such active agent is less concentrated than the optimal concentration for crosslinking it (step 109). Particularly, the second mass concentration of the active agent (catalyst and/or accelerator) is of 0.01%.

The new liquid resin mass added to the surplus mass collected outside the mould for forming the liquid resin mixture in the collecting container 27 is at least equal, preferably greater, still more preferably at least twice the surplus mass so that the active agent (catalyst and/or accelerator) concentration in the liquid mixture is of 50% or less than the first concentration: specifically, if the new resin should be devoid of the active agent (catalyst and/or accelerator) and should be dosed in a quantity twice the surplus resin collected in the container 27, the mass concentration of the active agent (catalyst and/or accelerator) would be about 1/3 the first concentration so that the resin would be stable at the liquid state for a standby time sufficient to transfer the whole contents of the container 27 to the supplying device 18 for a new manufacturing cycle (step 110).

De facto - once completed the cycle of manufacturing at least one elongated hollow body - to the resin mixture from the container 27 it is added a composition comprising the active agent (catalyst and/or accelerator) at a third concentration greater than the first concentration (step 111) for forming a liquid synthetic resin with the active agent (catalyst and/or accelerator) at least at said first concentration: such resin is - in a cycle of manufacturing a following hollow body - delivered inside said mould.

As previously discussed, during said step of introducing the synthetic resin in the mould, this latter is put or maintained in rotation around the prevalent development longitudinal axis of the mould itself at a predetermined angular speed with the synthetic resin at a liquid state which is supplied to the injection nozzle at a pressure greater than the atmospheric pressure.

During the step of depositing the resin and after during the solidification for crosslinking the same, it is provided to control the mould temperature (these steps are globally indicated by the box 112) by directing the thermoregulation fluid towards predetermined portions of an external lateral surface of the mould itself: as it was already illustrated, the fluid circuit 32 has the function of collecting the thermoregulation fluid falling from the mould, thermally regulating such fluid thanks to the heat exchange unit 40, and conveying the thermoregulation fluid again collected towards the distributors, and then again towards the mould external lateral surface. More particularly, the thermoregulation fluid is supplied to the mould from the distributors 33 in a thermal range proximate to a temperature predefined based on the materials and the executed cycle. For example, in many cases, the thermoregulation fluid is supplied to the distributor at a temperature proximate to 85°C. To this end, by suitably controlling the heat exchange unit and the thermoregulation fluid flow rate, the thermoregulation fluid temperature is maintained for example at a temperature less than 100°C, preferably comprised between 80°C and 90°C. More generally, by knowing the desired temperature at which the thermoregulation fluid is maintained, by controlling the pump 42 and heat exchange unit 40, it is possible to maintain the temperature of the cooling fluid in a neighborhood of the desired temperature and therefore ensure the optimal thermal regime for the mould. The thermally controlled thermoregulation fluid is directed at least towards a plurality of portions of an external lateral surface of the mould itself and, partially, towards the rotating supporting bearings of the mould.

Lastly, it is observed that for promoting the resin crosslinking step, it may be provided to light the internal cavity of the mould itself for example by one or more UV lamps, when, for example, it is used as synthetic resin one resin susceptible to crosslink by a light at predetermined radiations.

### PROCESSING UNIT

The processing unit 100 may comprise a single central unit controlling the above described operations or a plurality of units, each belonging to a respective subsystem of the apparatus 1. The unit 100 may be of a digital type or of an analog type or may combine a digital part and an analog part. The processing unit 100 comprises - or is connected to - one or more memories destined to store a program which, when executed by the unit 100, enables the unit itself to perform the above described functions.

### MATERIALS

The reinforcing fibrous material, for example consisting of woven or unwoven fabric layers, can be made of synthetic reinforcing fibres, such as carbon fibres, glass fibres, aramid fibre, Kevlar, boron fibre or natural fibres such as natural fibres of animal origin or natural fibres of vegetal origin.

The thermoregulation fluid comprises water or, preferably, oil, particularly diathermic oil.

Preferably, the synthetic resin is a thermosetting resin comprising, for example, polyester resins, vinyl ester resins, epoxy resins, phenolic resins and similar. In some applications, it is possible to provide the use of thermoplastic synthetic resins.

The active agent cited in the description and claims, may be not just a crosslinking catalyst, or a crosslinking accelerator, but also:
- a crosslinking agent,
- an agent including both a catalyst and a crosslinking accelerator,

- an agent including a crosslinking agent, and an accelerator,
- an agent including a crosslinking agent, and a catalyst,
- an agent including a crosslinking agent, an accelerator and a catalyst.

### ADVANTAGES

Thanks to the above described apparatus and process, it is obtained the possibility of forming hollow elongated bodies having a controlled thickness without wasting resin: in fact the surplus resin is recovered and reused as hereinbefore described.

The thermoregulation enables to maintain the system at ideal temperatures for the process without energy waste.

The rotating support thanks to the described bearings and to the lubrication and cooling of the same ensures an optimal and reliable operation over the time.

## Claims

1. Apparatus for manufacturing hollow elongated bodies, optionally tapered poles, made of reinforced synthetic resin:
- an elongated mould (2) having an internal surface (3) configured for receiving reinforcing fibres and synthetic resin, said internal surface (3) of the elongated mould (2) having a tapered shape, optionally a frusto-conical one,
- at least one actuating device (6) configured for putting in rotation the mould (2) around a prevalent development longitudinal axis (4) of the mould (2) itself,
- at least one injection nozzle (15) positioned and configured for introducing synthetic resin in said elongated mould (2), optionally wherein the injection nozzle (15) is configured for operating at at least one longitudinal end of said mould (2),
- a resin supplying device (18) connected to the injection nozzle (15) and configured for supplying synthetic resin at a liquid state to the injection nozzle (15),
**characterized in that** the apparatus further comprises:
- a temperature controlling group (32) associated to the mould (2) and in turn comprising:
o a predetermined number of distributors (33) of a thermoregulation fluid, positioned outside the mould (2) and configured for directing the thermoregulation fluid at least towards predetermined portions of an external lateral surface of the mould (2) itself,
o a collecting unit (35) positioned below the mould (2) and configured for collecting the thermoregulation fluid,
o a fluid circuit (37) interposed between the collecting unit (35) and the predetermined number of distributors, said fluid circuit (37) being configured for conveying the thermoregulation fluid from the collecting unit (35) towards the predetermined number of distributors,
- a winder (30) configured for receiving at least partially overlapped wound layers of a reinforcing fibrous material, wherein said elongated mould (2) is open on at least one longitudinal end for enabling to respectively introduce into and extracting from said mould (2) the winder (30).

2. Apparatus according to claim 1, wherein the control group (32) comprises:
- at least one heat exchange unit, placed in the fluid circuit (37) and destined to enable a thermal regulation of the thermoregulation fluid, and
- at least one pump placed in the fluid circuit (37), optionally placed between the collecting unit (35) and the heat exchange unit.

3. Apparatus according to claim 2, wherein the apparatus, or directly the control group (32), comprises a processing unit active on at least one of said pump and said heat exchange unit, said processing unit being configured for regulating at least one of:
- a flow rate of said pump, and
- an operative parameter of said heat exchange unit for maintaining the thermoregulation fluid temperature inside a predetermined thermal range, optionally at a temperature less than 100°C, preferably comprised between 80°C and 90°C.

4. Apparatus according to anyone of the preceding claims wherein the predetermined number of thermoregulation fluid distributors (33)comprises a plurality of distinct distributors (33)positioned outside the mould (2) and configured for directing the thermoregulation fluid at least towards respective portions of an external lateral surface of the mould (2) itself;
and wherein said distributors (33)are radially arranged around the external lateral surface of the mould (2) to define a plurality of ejecting points positioned according to circular crowns surrounding the mould (2) and axially offset from each other.

5. Apparatus according to claim 4 wherein the distributors (33)are spaced along the longitudinal development of the mould (2), optionally evenly spaced from each other, and each comprises at least one regulation valve member and at least one pressure sensor connected to a processing unit, this latter being configured for receiving a pressure signal from each pressure sensor and for controlling each valve member in order to regulate a supply pressure to the distributor or a flow rate of the thermoregulation fluid ejected from each distributor as a function of the detected pressure and a desired value respectively of pressure or flow rate which, in turn, varies as a function of the distributor position along the mould (2) longitudinal axis (4); optionally wherein the processing unit is configured for controlling the valve member of each distributor in order to supply the fluid at a supply pressure, the greater the diameter of the mould cross-section which the respective distributor faces the higher the supply pressure.

6. Apparatus according to anyone of the preceding claims comprising a supporting stationary structure destined to rotatively support said mould (2) and a plurality of rolling element bearings positioned outside the mould (2), each of said bearings having a stationary part constrained to the supporting stationary structure, and a rotating part constrained to a respective cross-section of the external lateral surface of the mould (2), rolling elements being positioned between the stationary part and the rotating part of each bearing; said stationary part and said rotating part of each bearing being positioned concentrically around a respective cross-section of the mould (2), optionally wherein said fluid distributors (33)are configured and oriented for directing a portion of the thermoregulation fluid towards said bearings.

7. Apparatus according to anyone of the preceding claims, wherein the actuating device (6) comprises a driving member cinematically connected to the mould (2) and configured for putting in rotation the mould (2) around said prevalent development longitudinal axis (4) of the mould (2) itself, wherein said driving member commands a driving wheel coupled to the driving shaft and configured for moving at least one transmission member in turn configured for putting in rotation a driven crown coupled to an external surface (5) of the lateral wall of the mould (2).

8. Apparatus according to claim 7, wherein the elongated mould (2) exhibits an external lateral surface (5) and an internal frusto-conical shape surface (3), wherein said longitudinal axis (4) is a symmetry central axis of the internal frusto-conical surface and wherein said driven crown is engaged to a terminal area of minimum diameter of the external lateral surface.

9. Apparatus according to anyone of the preceding claims, wherein the injection nozzle operates in a fixed position at a terminal area of the mould (2) and exhibits a dispensing opening arranged inside the mould (2) and at a predetermined distance - not greater than 1/10 of the mould axial extension - from the opening of minimum area of the mould (2) itself, and wherein the resin supplying device (18) is configured for supplying at a pressure higher than the atmospheric pressure, synthetic resin at a liquid state to the injection nozzle (15).

10. Apparatus according to anyone of the preceding claims, comprising a covering structure placed at least above and laterally to the external lateral surface of the mould (2) to define a housing receiving the mould (2) and the fluid distributors.

11. Apparatus according to anyone of the preceding claims, wherein the resin supplying device (18) is configured for supplying liquid synthetic resin comprising at least one active agent at a first concentration, the active agent being one of:
- a crosslinking catalyst,
- a crosslinking accelerator,
- a crosslinking agent,
- an agent including one or more of a catalyst, a crosslinking accelerator and a crosslinking agent.

12. Apparatus according to anyone of the preceding claims, wherein the dispensing device is configured - at each cycle of manufacturing a respective elongated body - for dispensing a mass of liquid synthetic resin greater than the liquid mass necessary for forming said elongated body.

13. Apparatus according to the preceding claim, wherein a processing unit is configured for controlling the dispensing device and commanding - during each cycle of manufacturing a respective elongated body - to dispense the liquid synthetic resin mass in an amount greater than the mass amount necessary for forming said elongated body in order to generate a surplus mass destined to exit from the mould (2).

14. Apparatus according to anyone of the preceding claims, comprising:
a main flange fixed at the longitudinal end of said mould (2) having the greatest internal cross-section, said main flange projecting radially towards the inside of the mould (2) and exhibiting an internal diameter substantially corresponding to the internal diameter of the longest base of said forming elongated body,
an ancillary flange fixed at the longitudinal end of said mould (2) having the smallest inside cross-section, said ancillary flange projecting radially towards the inside of the mould (2) and exhibiting an internal diameter substantially corresponding to the internal diameter of the shortest base of said forming elongated body; optionally wherein said main flange and/or ancillary flange exhibit a circular crown shape and are concentrically and coaxially arranged with respect to the frusto-conical internal surface (3) of said mould (2),
and a collector placed at at least one of the longitudinal ends of the mould (2) and configured for collecting a surplus mass of the liquid synthetic resin exiting the mould (2), particularly flowing over said main flange;
wherein said collector exhibits a discharge opening, optionally a valved one, configured for discharging said surplus synthetic resin towards a collecting body.

15. Apparatus according to anyone of the preceding claims,
wherein a movement for inserting and extracting the winder (30) is performed by at least one respective actuating group controlled by a processing unit;
optionally wherein an illuminator, preferably an UV illuminator, is positioned with respect to the mould (2) in order to light a cavity inside the mould (2) itself and promote a crosslinking of said synthetic resin.

## Patentansprüche

1. Vorrichtung zur Herstellung hohler, länglicher Körper, optional sich verjüngender Stangen, welche aus verstärktem synthetischen Harz hergestellt sind:
- eine längliche Form (2), welche eine innere Fläche (3) aufweist, welche dazu eingerichtet ist, verstärkende Fasern und synthetisches Harz aufzunehmen, wobei die innere Fläche (3) der länglichen Form (2) eine sich verjüngende, optional eine kegelstumpfförmige, Gestalt aufweist,
- wenigstens eine Betätigungsvorrichtung (6), welche dazu eingerichtet ist, die Form (2) in eine Drehung um eine longitudinale Achse einer vorherrschenden Erstreckung (4) der Form (2) selbst herum zu versetzen,
- wenigstens eine Injektionsdüse (15), welche zum Einführen synthetischen Harzes in die längliche Form (2) positioniert und eingerichtet ist, optional, wobei die Injektionsdüse (15) dazu eingerichtet ist, an wenigstens einem longitudinalen Ende der Form (2) zu arbeiten,
- eine Harzzuführvorrichtung (18), welche mit der Injektionsdüse (15) verbunden ist und dazu eingerichtet ist, synthetisches Harz in einem flüssigen Zustand der Injektionsdüse (15) zuzuführen,
**dadurch gekennzeichnet, dass** die Vorrichtung ferner umfasst:
- eine Temperatur-Steuer-/Regelgruppe (32), welche der Form (2) zugeordnet ist und wiederum umfasst:
∘ eine vorbestimmte Anzahl von Verteilern (33) eines Thermoregulationsfluides, welche außerhalb der Form (2) positioniert sind und dazu eingerichtet sind, das Thermoregulationsfluid wenigstens in Richtung vorbestimmter Abschnitte einer äußeren, lateralen Fläche der Form (2) selbst zu leiten,
∘ eine Sammeleinheit (35), welche unterhalb der Form (2) positioniert ist und dazu eingerichtet ist, das Thermoregulationsfluid zu sammeln,
∘ einen Fluidkreislauf (37), welcher zwischen der Sammeleinheit (35) und der vorbestimmten Anzahl von Verteilern eingefügt ist, wobei der Fluidkreislauf (37) dazu eingerichtet ist, das Thermoregulationsfluid von der Sammeleinheit (35) in Richtung der vorbestimmten Anzahl von Verteilern zu befördern,
- eine Wickeleinrichtung (30), welche dazu eingerichtet ist, wenigstens teilweise überlappendende, gewickelte Schichten eines verstärkenden Fasermaterials aufzunehmen, wobei die längliche Form (2) an wenigstens einem longitudinalen Ende offen ist, um zu ermöglichen, die Wickeleinrichtung (30) in die Form (2) einzuführen bzw. aus ihr herauszunehmen.

2. Vorrichtung nach Anspruch 1, wobei die Steuer-/Regelgruppe (32) umfasst:
- wenigstens eine Wärmetauschereinheit, welche in dem Fluidkreislauf (37) platziert ist und dazu bestimmt ist, eine thermische Regulierung des Thermoregulationsfluides zu ermöglichen, und
- wenigstens eine Pumpe, welche in dem Fluidkreislauf (37) platziert ist, optional zwischen der Sammeleinheit (35) und der Wärmetauschereinheit platziert ist.

3. Vorrichtung nach Anspruch 2, wobei die Vorrichtung, oder direkt die Steuer-/Regelgruppe (32), eine Verarbeitungseinheit umfasst, welche an wenigstens einem der Pumpe und der Wärmetauschereinheit wirksam ist, wobei die Verarbeitungseinheit eingerichtet ist zum Regulieren wenigstens eines aus:
- einer Strömungsrate der Pumpe und
- eines Betriebsparameters der Wärmetauschereinheit zum Aufrechterhalten der Temperatur des Thermoregulationsfluides innerhalb eines vorbestimmten thermischen Bereichs, optional bei einer Temperatur, welche niedriger als 100° C ist, vorzugsweise zwischen 80° C und 90° C umfasst ist.

4. Vorrichtung nach einem der vorhergehenden Ansprüche, wobei die vorbestimmte Anzahl von Thermoregulationsfluid-Verteilern (33) eine Mehrzahl verschiedener Verteiler (33) umfasst, welche außerhalb der Form (2) positioniert sind und dazu eingerichtet sind, das Thermoregulationsfluid wenigstens in Richtung jeweiliger Abschnitte einer äußeren, lateralen Fläche der Form (2) selbst zu leiten;
und wobei die Verteiler (33) radial um die äußere, laterale Fläche der Form (2) herum angeordnet sind, um eine Mehrzahl von Ausstoßpunkten zu definieren, welche gemäß kreisförmiger Kränze positioniert sind, welche die Form (2) umgeben und axial voneinander versetzt sind.

5. Vorrichtung nach Anspruch 4, wobei die Verteiler (33) entlang der longitudinalen Erstreckung der Form (2) beabstandet sind, optional gleichmäßig voneinander beabstandet sind, und jeder wenigstens ein Regulationsventilelement und wenigstens einen Drucksensor umfasst, welche mit einer Verarbeitungseinheit verbunden sind, wobei diese Letztere dazu eingerichtet ist, ein Drucksignal von jedem Drucksensor zu empfangen und jedes Ventilelement zu steuern/regeln, um einen Zuführdruck zu dem Verteiler oder eine Strömungsrate des Thermoregulationsfluides, welches von jedem Verteiler ausgestoßen wird, als eine Funktion des erfassten Drucks und eines gewünschten Werts eines Drucks bzw. einer Strömungsrate zu regulieren, welche wiederum als eine Funktion der Verteilerposition entlang der longitudinalen Achse (4) der Form (2) variiert; optional, wobei die Verarbeitungseinheit dazu eingerichtet ist, das Ventilelement jedes Verteilers zu steuern/regeln, um das Fluid mit einem Zuführdruck zuzuführen, wobei, je größer der Durchmesser des Formquerschnitts ist, welchem der jeweilige Verteiler zugewandt ist, desto höher der Zuführdruck ist.

6. Vorrichtung nach einem der vorhergehenden Ansprüche, umfassend eine halternde, stationäre Struktur, welche dazu bestimmt ist, die Form (2) drehbar zu haltern, und eine Mehrzahl von Rollenelementlagern, welche außerhalb der Form (2) positioniert sind, wobei jedes der Lager einen stationären Teil, welcher an der halternden, stationären Struktur gehalten ist, und einen sich drehenden Teil aufweist, welcher an einem jeweiligen Querschnitt der äußeren, lateralen Fläche der Form (2) gehalten ist, wobei Rollenelemente zwischen dem stationären Teil und dem sich drehenden Teil jedes Lagers positioniert sind; wobei der stationäre Teil und der sich drehende Teil jedes Lagers konzentrisch um einen jeweiligen Querschnitt der Form (2) herum positioniert sind, optional, wobei die Fluidverteiler (33) zum Leiten eines Teils des Thermoregulationsfluides in Richtung der Lager eingerichtet und orientiert sind.

7. Vorrichtung nach einem der vorhergehenden Ansprüche, wobei die Betätigungsvorrichtung (6) ein Antriebselement umfasst, welches mit der Form (2) kinematisch verbunden ist und dazu eingerichtet ist, die Form (2) in eine Drehung um die longitudinale Achse der vorherrschenden Erstreckung (4) der Form (2) selbst herum zu versetzen, wobei das Antriebselement ein Antriebsrad befehligt/steuert, welches mit der Antriebswelle gekoppelt ist und dazu eingerichtet ist, wenigstens ein Übertragungselement zu bewegen, und wiederum dazu eingerichtet ist, einen angetriebenen Kranz in eine Drehung zu versetzen, welcher mit einer äußeren Fläche (5) der lateralen Wand der Form (2) gekoppelt ist.

8. Vorrichtung nach Anspruch 7, wobei die längliche Form (2) eine äußere, laterale Fläche (5) und eine innere Fläche mit einer kegelstumpfförmigen Gestalt (3) aufweist, wobei die longitudinale Achse (4) eine Symmetrie-Mittelachse der inneren, kegelstumpfförmigen Fläche ist und wobei der angetriebene Kranz mit einem Endbereich eines minimalen Durchmessers der äußeren, lateralen Fläche in Eingriff steht.

9. Vorrichtung nach einem der vorhergehenden Ansprüche, wobei die Injektionsdüse in einer fixierten Position an einem Endbereich der Form (2) arbeitet und eine Abgabeöffnung aufweist, welche innerhalb der Form (2) und in einem vorbestimmten Abstand - nicht größer als 1/10 der axialen Erstreckung der Form - von der Öffnung eines minimalen Bereichs der Form (2) selbst angeordnet ist, und wobei die Harzzuführvorrichtung (18) dazu eingerichtet ist, bei einem Druck, welcher höher als der atmosphärische Druck ist, synthetisches Harz in einem flüssigen Zustand der Injektionsdüse (15) zuzuführen.

10. Vorrichtung nach einem der vorhergehenden Ansprüche, umfassend eine abdeckende Struktur, welche wenigstens oberhalb und lateral zu der äußeren, lateralen Fläche der Form (2) platziert ist, um ein Gehäuse zu definieren, welches die Form (2) und die Fluidverteiler aufnimmt.

11. Vorrichtung nach einem der vorhergehenden Ansprüche, wobei die Harzzuführvorrichtung (18) dazu eingerichtet ist, flüssiges, synthetisches Harz zuzuführen, welches wenigstens ein aktives Mittel in einer ersten Konzentration umfasst, wobei das aktive Mittel eines ist aus:
- einem Vernetzungskatalysator,
- einem Vernetzungsbeschleuniger,
- einem Vernetzungsmittel,
- einem Mittel, welches eines oder mehrere eines Katalysators, eines Vernetzungsbeschleunigers und eines Vernetzungsmittels umfasst.

12. Vorrichtung nach einem der vorhergehenden Ansprüche, wobei die Abgabevorrichtung dazu eingerichtet ist, - bei jedem Herstellungszyklus eines jeweiligen länglichen Körpers - eine Masse flüssigen, synthetischen Harzes abzugeben, welche größer ist als die flüssige Masse, welche zum Bilden des länglichen Körpers notwendig ist.

13. Vorrichtung nach dem vorhergehenden Anspruch, wobei eine Verarbeitungseinheit dazu eingerichtet ist, die Abgabevorrichtung zu steuern/regeln und - während jedes Herstellungszyklus eines jeweiligen länglichen Körpers - zu befehlen, die flüssige, synthetische Harzmasse in einer Menge abzugeben, welche größer ist als die Massenmenge, welche zum Bilden des länglichen Körpers notwendig ist, um eine überschüssige Masse zu erzeugen, welche dazu bestimmt ist, aus der Form (2) auszutreten.

14. Vorrichtung nach einem der vorhergehenden Ansprüche, umfassend:
einen Hauptflansch, welcher an dem longitudinalen Ende der Form (2) fixiert ist, welches den größten inneren Querschnitt aufweist, wobei der Hauptflansch radial in Richtung des Inneren der Form (2) vorsteht und einen Innendurchmesser aufweist, welcher im Wesentlichen dem Innendurchmesser der längsten Basis des länglichen Formungskörpers entspricht,
einen zusätzlichen Flansch, welcher an dem longitudinalen Ende der Form (2) fixiert ist, welches den kleinsten inneren Querschnitt aufweist, wobei der zusätzliche Flansch radial in Richtung des Inneren der Form (2) vorsteht und einen Innendurchmesser aufweist, welcher im Wesentlichen dem Innendurchmesser der kürzesten Basis des länglichen Formungskörpers entspricht; optional, wobei der Hauptflansch und/oder der zusätzliche Flansch eine kreisförmige Kranzgestalt aufweisen und konzentrisch und koaxial in Bezug auf die kegelstumpfförmige, innere Fläche (3) der Form (2) angeordnet sind,
und eine Sammeleinrichtung, welche an wenigstens einem der longitudinalen Enden der Form (2) platziert ist und dazu eingerichtet ist, eine überschüssige Masse des flüssigen, synthetischen Harzes zu sammeln, welche teilweise über den Hauptflansch strömend aus der Form (2) austritt;
wobei die Sammeleinrichtung eine, optional mit einem Ventil versehene, Abführöffnung aufweist, welche dazu eingerichtet ist, das überschüssige, synthetische Harz in Richtung eines Sammelkörpers abzuführen.

15. Vorrichtung nach einem der vorhergehenden Ansprüche,
wobei eine Bewegung zum Einsetzen und Herausnehmen der Wickeleinrichtung (30) durch wenigstens eine jeweilige Betätigungsgruppe durchgeführt wird, welche von einer Verarbeitungseinheit gesteuert/geregelt wird;
optional, wobei eine Beleuchtungseinrichtung, vorzugsweise eine UV-Beleuchtungseinrichtung, in Bezug auf die Form (2) positioniert ist, um einen Hohlraum innerhalb der Form (2) selbst zu beleuchten und eine Vernetzung des synthetischen Harzes zu begünstigen.

## Revendications

1. Appareil de fabrication de corps allongés creux, éventuellement de poteaux effilés, fabriqués à partir de résine synthétique renforcée :
- un moule allongé (2) ayant une surface interne (3) configurée pour recevoir des fibres de renfort et de la résine synthétique, ladite surface interne (3) du moule allongé (2) présentant une forme conique, éventuellement une frusto-conique,
- au moins un dispositif d'actionnement (6) configuré pour placer le moule (2) en rotation autour d'un axe longitudinal de développement prévalent (4) du moule (2) lui-même,
- au moins une buse d'injection (15) positionnée et configurée pour introduire de la résine synthétique dans ledit moule (2) allongé, éventuellement la buse d'injection (15) étant configurée pour le fonctionnement d'au moins une extrémité longitudinale dudit moule (2),
- un dispositif d'alimentation de résine (18) relié à la buse d'injection (15) et configuré pour alimenter de la résine synthétique sous un état liquide à la buse d'injection (15),
**caractérisé en ce que** l'appareil comprend en outre :
- un groupe de régulation de température (32) associé au moule (2) et à son tour comprenant :
∘ un nombre prédéterminé de distributeurs (33) d'un liquide de thermorégulation, positionnés à l'extérieur du moule (2) et configurés pour diriger le liquide de thermorégulation au moins vers parties prédéterminées d'une surface latérale externe du moule (2) lui-même,
∘ une unité de collecte (35) positionnée en-dessous du moule (2) et configurée pour recueillir le liquide de thermorégulation,
∘ un circuit de liquide (37) interposé entre l'unité de collecte (35) et le nombre prédéterminé de distributeurs, ledit circuit de liquide (37) étant configuré pour transporter le liquide de thermorégulation depuis l'unité de collecte (35) vers le nombre prédéterminé de distributeurs,
- un enrouleur (30) configuré pour recevoir au moins des couches enroulées partiellement chevauchantes d'un matériau fibreux de renfort, ledit moule allongé (2) étant ouvert sur au moins une extrémité longitudinale pour permettre l'introduction respectivement à l'intérieur et l'extraction depuis ledit moule (2) de l'enrouleur (30).

2. Appareil selon la revendication 1, le groupe de commande (32) comprenant :
- au moins une unité d'échange thermique, placée dans le circuit de liquide (37) et destinée à permettre une régulation thermique du liquide de thermorégulation, et
- au moins une pompe placée dans le circuit de liquide (37), éventuellement placée entre l'unité de collecte (35) et l'unité d'échange thermique.

3. Appareil selon la revendication 2, dans lequel l'appareil, ou directement le groupe de commande (32), comprend une unité de traitement active sur au moins l'une de ladite pompe et ladite unité d'échange thermique, ladite unité de traitement étant configurée pour réguler au moins l'un de :
- un débit de ladite pompe, et
- un paramètre de fonctionnement de ladite unité d'échange thermique pour maintenir la température du liquide de thermorégulation à l'intérieur d'une plage thermique prédéterminée, éventuellement à une température inférieure à 100°C, préférablement comprise entre 80°C et 90°C.

4. Appareil selon l'une quelconque des revendications précédentes dans lequel le nombre prédéterminé de distributeurs (33) de liquide de thermorégulation comprend une pluralité de distributeurs distincts (33) positionnés à l'extérieur du moule (2) et configurés pour diriger le liquide de thermorégulation au moins vers les parties respectives d'une surface latérale externe du moule (2) lui-même ;
et où lesdits distributeurs (33) sont radialement disposés autour de la surface latérale externe du moule (2) pour définir une pluralité de points d'éjection positionnés en couronnes circulaires entourant le moule (2) et décalés axialement l'un par rapport à l'autre.

5. Appareil selon la revendication 4, les distributeurs (33) étant espacés le long du développement longitudinal du moule (2), éventuellement espacés de manière uniforme l'un de l'autre, et chacun comprenant au moins un élément de vanne de régulation et au moins un capteur de pression relié à une unité de traitement, cette dernière étant configurée pour recevoir un signal de pression depuis chaque capteur de pression et pour réguler chaque élément de vanne afin de réguler une pression d'alimentation au niveau du distributeur ou un débit du liquide de thermorégulation éjecté de chaque distributeur comme une fonction de la pression détectée et une valeur souhaitée respectivement de pression ou de débit qui, à son tour, varie comme une fonction de la position du distributeur le long de l'axe longitudinal (4) du moule (2) ; éventuellement l'unité de traitement étant configurée pour réguler l'élément de vanne de chaque distributeur afin d'alimenter le liquide à une pression d'alimentation, plus le diamètre de la section transversale du moule auquel le distributeur respectif fait face est grand plus la pression d'alimentation est haute.

6. Appareil selon l'une quelconque des revendications précédentes comprenant une structure stationnaire de support destinée à supporter de manière rotative ledit moule (2) et une pluralité de roulements d'éléments de roulement positionnés à l'extérieur du moule (2), chacun desdits roulements ayant une partie stationnaire contrainte à la structure stationnaire de support, et une partie rotative contrainte à une section transversale respective de la surface latérale externe du moule (2), les éléments de roulement étant positionnés entre la partie stationnaire et la partie rotative de chaque roulement ; ladite partie stationnaire et ladite partie rotative de chaque roulement étant positionnées de manière concentrique autour d'une section transversale respective du moule (2), éventuellement lesdits distributeurs de liquide (33) étant configurés et orientés pour orienter une partie du liquide de thermorégulation vers lesdits roulements.

7. Appareil selon l'une quelconque des revendications précédentes, dans lequel le dispositif d'actionnement (6) comprend un élément d'entraînement relié de manière cinématique au moule (2) et configuré pour placer en rotation le moule (2) autour dudit axe longitudinal de développement prévalent (4) du moule (2) lui-même, où ledit élément d'entraînement régule une roue d'entraînement accouplée à la tige d'entraînement et configurée pour le déplacement d'au moins un élément de transmission à son tour configuré pour placer en rotation une couronne entraînée accouplée à une surface externe (5) de la paroi latérale du moule (2).

8. Appareil selon la revendication 7, dans lequel le moule allongé (2) fait preuve d'une surface latérale externe (5) et d'une surface de forme frusto-conique interne (3), où ledit axe longitudinal (4) est un axe central de symétrie de la surface frusto-conique interne et dans laquelle ladite couronne entraînée est engagée à une surface terminale du diamètre minimal de la surface latérale externe.

9. Appareil selon l'une quelconque des revendications précédentes, dans lequel la buse d'injection fonctionne en une position fixe à une surface terminale du moule (2) et fait preuve d'une ouverture de distribution disposée à l'intérieur du moule (2) et à une distance prédéterminée - non supérieure à 1/10 de l'extension axiale du moule - depuis l'ouverture de la zone minimale du moule (2) lui-même, et où le dispositif d'alimentation de résine (18) est configuré pour l'alimentation à une pression supérieure à la pression atmosphérique, de résine synthétique sous un état liquide au niveau de la buse d'injection (15).

10. Appareil selon l'une quelconque des revendications précédentes, comprenant une structure de recouvrement placée au moins au-dessus et latéralement vis-à-vis de la surface latérale externe du moule (2) pour définir un logement de réception du moule (2) et des distributeurs de liquide.

11. Appareil selon l'une quelconque des revendications précédentes, dans lequel le dispositif d'alimentation de résine (18) est configuré pour alimenter de la résine synthétique liquide comprenant au moins un agent actif à une première concentration, l'agent actif étant l'un de :
- un catalyseur de réticulation,
- un accélérateur de réticulation,
- un agent de réticulation,
- un agent comprenant un ou plusieurs d'un catalyseur, d'un accélérateur de réticulation et d'un agent de réticulation.

12. Appareil selon l'une quelconque des revendications précédentes, dans lequel le dispositif de distribution est configuré - à chaque cycle de fabrication d'un corps allongé respectif - pour distribuer une masse de résine synthétique liquide supérieure à la masse liquide nécessaire pour former ledit corps allongé.

13. Appareil selon la revendication précédente, dans lequel une unité de traitement est configurée pour réguler le dispositif de distribution et commander - durant chaque cycle de fabrication d'un corps allongé respectif - afin de distribuer la masse de résine synthétique liquide en une quantité supérieure à la quantité de masse nécessaire pour former ledit corps allongé afin de générer une masse en surplus destinée à sortir du moule (2).

14. Appareil selon l'une quelconque des revendications précédentes, comprenant :
une collerette principale fixée à l'extrémité longitudinale dudit moule (2) ayant la section transversale interne la plus grande, ladite collerette principale se projetant radialement vers l'intérieur du moule (2) et faisant preuve d'un diamètre interne correspondant sensiblement au diamètre interne de la base la plus longue dudit corps allongé de formage,
une collerette auxiliaire fixée à l'extrémité longitudinale dudit moule (2) ayant la section transversale interne la plus petite, ladite collerette auxiliaire se projetant radialement vers l'intérieur du moule (2) et faisant preuve d'un diamètre interne correspondant sensiblement au diamètre interne de la base la plus courte dudit corps allongé de formage ; éventuellement ladite collerette principale et/ou collerette auxiliaire faisant preuve d'une forme de couronne circulaire et étant disposée de manière concentrique et coaxiale par rapport à la surface interne (3) frusto-conique dudit moule (2),
et un collecteur placé au niveau d'au moins l'une des extrémités longitudinales du moule (2) et configuré pour collecter une masse en surplus de la résine synthétique liquide sortant du moule (2), s'écoulant particulièrement sur ladite collerette principale ;
ledit collecteur faisant preuve d'une ouverture d'évacuation, éventuellement d'une à vanne, configuré pour évacuer ladite résine synthétique en surplus vers un corps de collecte.

15. Appareil selon l'une quelconque des revendications précédentes,
dans lequel un mouvement d'insertion et d'extraction de l'enrouleur (30) est exécuté par au moins un groupe d'actionnement respectif régulé par une unité de traitement ;
éventuellement où un dispositif d'éclairage, préférablement un dispositif d'éclairage UV, est positionné par rapport au moule (2) afin d'éclairer une cavité à l'intérieur du moule (2) lui-même et favoriser une réticulation de ladite résine synthétique.
